# EUROPEAN PATENT SPECIFICATION

(11) **EP 1 023 222 B1**
(45) Date of publication and mention of the grant of the patent: **17.04.2002**
(21) Application number: 98948381.3
(22) Date of filing: 21.09.1998
(51) Int. Cl.: B65B 21/06, B65G 47/08, B65G 37/00

(54) **ARTICLE GROUPING MECHANISM**
EINGRUPPIERUNGSMASCHINE
MECANISME DE REGROUPEMENT D'ARTICLES

(30) Priority: 19.09.1997 GB 9719949
(43) Date of publication of application: 02.08.2000
(73) Proprietor: THE MEAD CORPORATION, Dayton Ohio 45463 (US)
(72) Inventor: BONNAIN, Jean-Christophe, F-36000 Chateauroux (FR); DUSSART, Jean-Jacques, F-36000 Chateauroux (FR)
(74) Representative: Hepworth, John Malcolm
(86) International application number: US9819651
(87) International publication number: WO9914122

(56) References cited:
- EP-A- 0 126 553
- EP-A- 0 708 028
- DE-A- 19 505 997

## Description

This invention relates to packaging of primary articles such as cans and bottles in multiple packaged cartons and is more particularly concerned with feeding such cartons from a hopper and for initiating and then completing a loading operation of cartons in sequence.

A majority of known packaging machines are dedicated machines which construct only one type of carton. Therefore, modern bottling plants are required to use a plurality of packaging machines to package different carton types, each machine taking up considerable floor space and being expensive to both purchase and operate.

A limited number of packaging machines are capable of packaging different sizes of one carton, for example, six, eight or twelve bottles of a wraparound carton. All such machines require adjustment when switching from one size ortype of carton to another. This adjustment includes the manual removal of all ofthe cartons within the packaging machine and possibly the mechanical adjustment of components in the machine. During this changeover period, which can be thirty minutes or more, a machine cannot be used (known as downtime), which is an expensive delay in a bottling plant. Such a delay may even result in downtime for the entire bottling line, not just the packaging machine, if problems arise during the changeover procedure.

The present invention can be used with a packaging machine described in a corresponding application (applicants reference D-7725). It is envisaged that the present invention can be used in various other types of packaging machine. Alternatively, the grouping mechanism of the present invention can be sold as an individual module to be fitted to new equipment or to existing equipment on a retro fit basis.

More particularly, this invention relates to a mechanism for grouping together a plurality of articles from an infeed stream at an infeed end of a packaging machine and is particularly useful for grouping together a plurality of cans or bottles in a multiple packaging machine.

In a known spacer and conveying mechanism disclosed in EP 0 126 553, or EP 0 708 028, a series of spacer elements are spaced apart at fixed locations on the endless chains, each spacer element being configured to engage a plurality of articles from an infeed stream of articles and convey those articles downstream of the machine. The spacing between each spacer element corresponds to the spacing between successive groups of articles. GB A 974 995 discloses a grouping mechanism for grouping articles into package units which comprises a first pair of chains which have lugs spaced apart at fixed intervals for engaging articles at an infeed end of the apparatus. The pair of chains are mounted on opposite sides of a pair of fixed support plates which together with the lugs cooperate to divide the array of articles at the infeed into groups of fixed separation and propel the groups towards a second pair of chains also having lugs spaced apart at fixed intervals. The second pair of chains has a greater downstream velocity compared to the first pair of chains. The upstream article of a group of articles is engaged by a lug of the second pair of chains thereby forcing the groups of articles forward at a greater speed than that determined by the first pair of chains.

The present invention seeks to overcome the commercial disadvantages of known packaging machines and spacing mechanism by providing a grouping mechanism which is able to group articles for loading into more than one type of carton. Further, the invention is capable of switching from one configuration of grouped articles to another for loading into different carton types or sizes with minimum downtime. Further, the modular nature of the present invention enables a fully flexible machine to be constructed which overcomes, or at least mitigates, the problems of known machines.

One aspect of the invention provides a grouping mechanism for grouping articles to be loaded into a carton and delivered to the mechanism from an infeed stream at an infeed end of a packaging machine, which mechanism comprises a pair of opposed spacer elements, each spacer element adapted to engage at least one article from the infeed stream and to convey the article through a working reach of the mechanism and transfer means being provided to return each spacer element along a return reach such that they are returned upstream of the working reach. There further comprises adjustment means toadjust the spacing between said opposed spacer elements whereby a third article intermediate and juxtaposed said engaged articles is conveyed by said spacer elements.

According to yet another optional feature ofthis aspect of the invention, the third article may lead the engaged articles during the working reach and wherein article alignment means may be provided to move the third article into lateral alignment with the engaged articles when the engaged articles are disengaged from the spacer element.

According to still another optional feature of this aspect of the invention, the article alignment means may be provided by opposed panels of the carton in contact with the articles to guide the articles into alignment. Alternatively the article alignment means may comprise lugs mounted to side chain assemblies for engaging leading and trailing ends of the grouping.

According to another optional feature of this aspect of the invention, there may further comprise adjustment means to adjust the spacing between the spacer elements to receive two or three rows of articles. Preferably the adjustment means may be provided by a moveable platform upon which one of the opposed spacer elements may be mounted to move said spacer element relative the other one of the opposed spacer elements.

According to an optional feature of this aspect of the invention, the spacer element comprises a part cylindrical recess to receive a portion of the article being conveyed. Preferably the spacer element may further comprise a second party cylindrical recess to receive a portion of a second article to be conveyed in a grouped arrangement with said first article.

According to a further optional feature of this aspect of the invention the spacer element may be mounted on an endless chain driven by drive means. Preferably each spacer element may be provided with a cam follower that may be mounted on a cam track, wherein each cam track provides a path for the spacer elements to maintain the recesses parallel to the articles during the engagement.

According to an yet another optional feature of this aspect of the invention the spacer element may further comprise a second part cylindrical recess to receive a portion of a second article to be conveyed in a grouped arrangement with the first article.

According to another optional feature of this aspect of the invention regulating means may be provided to control the flow of articles at the infeed end, the regulating means further comprising means to control the pressure of the articles into the machine and means to determine the correct number of articles for each carton. Preferably the means to control the pressure of the articles comprises an infeed star wheel.
FIGURE 1 is a perspective view of an upstream end of a packaging machine incorporating the article grouping mechanism of the present invention;
FIGURE 2 is a perspective view illustrating the article grouping mechanism of the present invention;
FIGURE 3 is an exploded view of the support platform used with the article grouping mechanism of the invention
FIGURE 4 is a plan view of the article grouping mechanism for two rows; and
FIGURE 5 is a plan view of the article grouping mechanism for three rows.

A machine according to the present invention is capable of grouping articles in different configurations for loading in a variety of carton types, for example, fully enclosed, wraparound and basket type cartons. Any reference in this specification to carton type includes different sizes of a particular carton style. For example, the mechanism can load fully enclosed cartons for eight or twelve articles configured in 2 x 4 and 3 x 4 respectively.

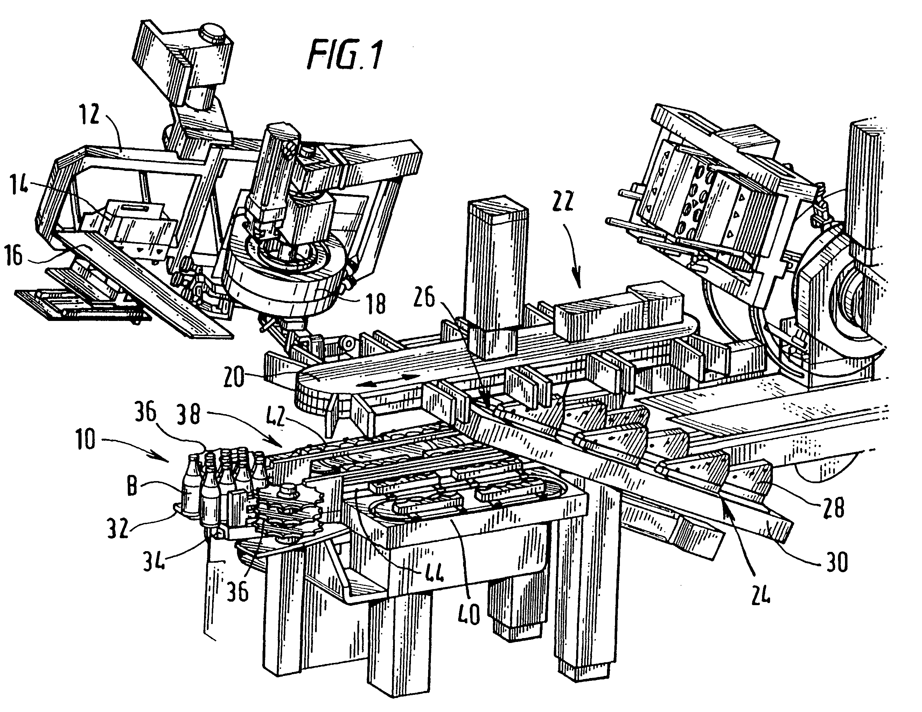

Referring to Figures 1 of the drawings there is shown a machine 10 for packaging cartons formed from a (unitary) blank of paperboard or similar sheet material. The upstream end of the machine includes a dual hopper 12 in which a multiplicity of cartons 14 in a collapsed condition are held ready for processing. A back feeder 16 of the type referred to in corresponding application (Applicant's reference EP-1 023 222) and a rotary vacuum feeder 18 are positioned adjacent the dual hopper 12. The rotary vacuum feeder 18 transfers sequentially cartons from the hopper 12 to a paper feed chain 20. The back feeder 16 comes into contact with the carton during its orbital path and separates opposing walls to part erect the carton. A paper feed chain 20 is provided to complete the carton set up and to transfer cartons downstream to the loading station 22.

Thereafter, carton engagement with the paper feed chain 20 is gradually transferred as the cartons move downstream to a pair of side lug chain sets 24 shown in Figure 1. Each side lug chain set 24 is of similar construction and includes endless chains 26 having a plurality of guide pin lugs 28 which engage the opposed panels of the carton 14 to retain it in the set up condition as it moves downstream. The endless chain sets 24 are mounted on table 30 which are downwardly inclined towards the loading station 22.

Articles such as bottles B or cans are fed into the machine 10 by a conveyor for example an infeed conveyor belt 32 moving on a support platform 34. In this embodiment, three conveyors are provided, each conveyor moving one row of articles. The infeed stream of articles in side by side abutting relationship are introduced to the infeed end of a multiple packaging machine. The line pressure of the articles is controlled by a pair of infeed star wheels 36, as is well known. The articles then enter a grouping station 38 which groups the correct number of articles per carton by means of a series of article grouping assemblies 40, 42. These assemblies 40, 42 also control the flow of the articles so that they can be introduced to the carton at the same rate as the carton flow. Thereafter, the grouped articles are moved to the loading station 22 by means of an article conveyor 44.

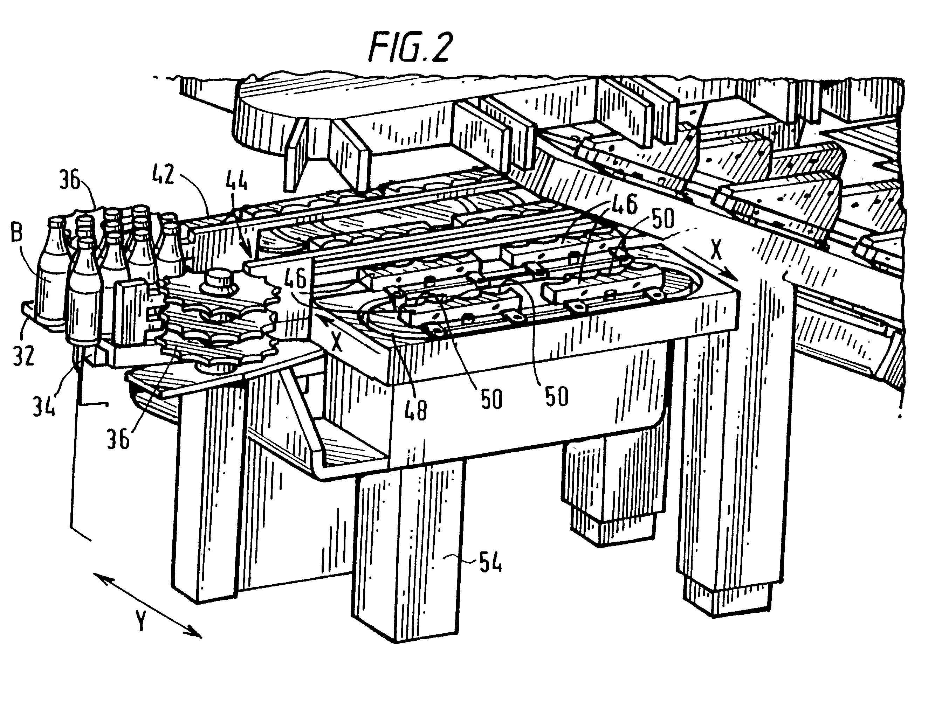

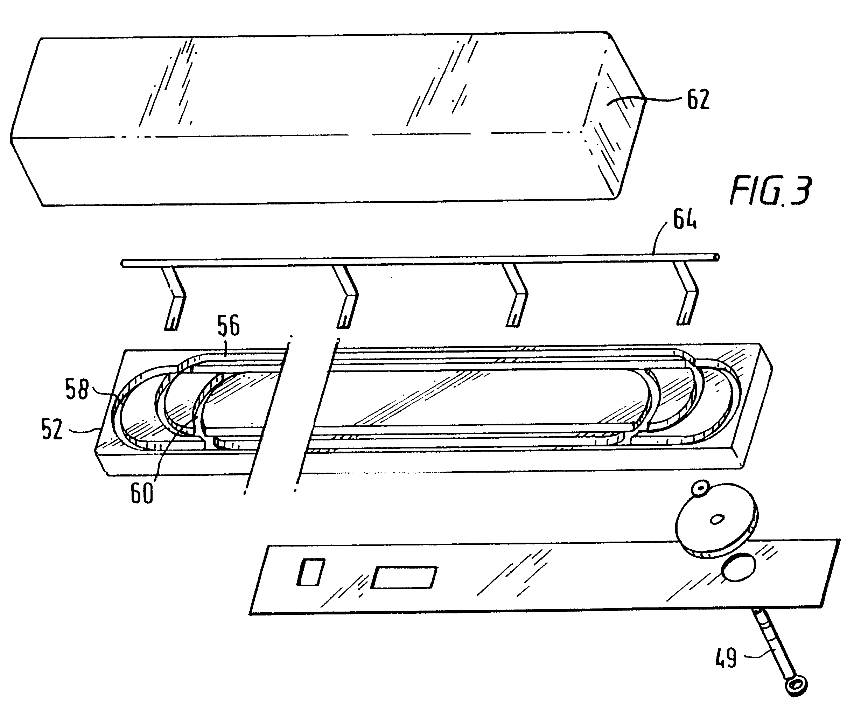

The construction of the article grouping assemblies 40, 42 outlined above. will now be described with reference to Figures 2 and 3. In this embodiment a grouping assembly 40, 42 is positioned on each side of the article conveyor 44. Both grouping assemblies 40, 42 are identical in construction, and therefore, only the nearside assembly 40 is described in detail. The assembly 40 includes four spacer elements 46 mounted onto an endless chain 48. The spacer element 46 comprises four part cylindrical recesses 50 positioned one to next. Each recess is shaped substantially to conform to a peripheral wall portion of a bottle B or can which the recess is to engage.

The spacer element 46 is connected to the endless chain 48 by suitable attachment means, for example, a bearing so that the spacer element can rotate about the attachment. Cam followers (not shown) extend from each end of the spacer element. The endless chain 48 is mounted onto a table 52 supported on a platform and base 54.

As illustrated in Figure 3, the table 52 includes an oval recess 56 to receive the endless chain 48 and a cam track 58, 60 to receive the cam followers. The endless chain set 48 is driven by a motor for example a servo motor, through a drive shaft 49. As each spacer element 46 moves along the path of the cam track 58, 60, the recesses 50 are maintained in a plane parallel to the article conveyor 44. This arrangement allows the spacer elements 46 to be moved laterally, designated by letter X at each end of the table 52 to assist in the smooth engagement and disengagement of the articles B in the recesses 50. In this embodiment, a guard 62 and a guide rail 64 are also provided to minimise unwanted movement of the articles.

It will be understood that the grouping mechanism 40, 42 of the invention has been illustrated with reference to a specific embodiment and that numerous modifications are possible within the scope of the invention. The grouping mechanism is able to process cartons comprising numerous configurations of groups of articles covering a range of carton size and shape, for example, four, six, eight and twelve bottles without undue time being spent in adjusting the mechanism.

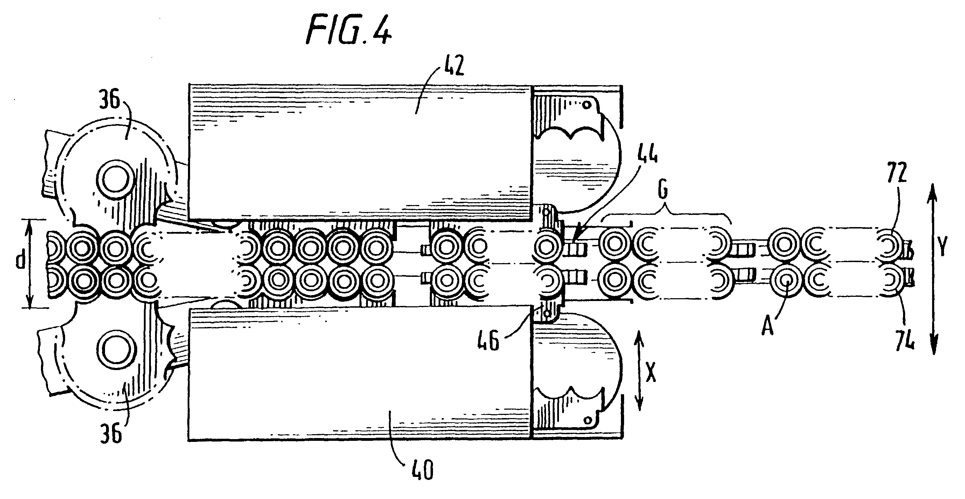

Thus, the assemblies are mounted onto platforms which are moveable in a direction designated by letter Y shown in Figures 2 and 4, so that one or both of the assemblies 40, 42 can be moved toward or away from the article conveyor 44 according to whether two or three rows of articles B are required. In this embodiment, the near side assembly is fixed and the far side grouping assembly 42 is moved towards the near side assembly 40 when it is desired to package two rows of articles 70, 72, as shown in Figure 4. The distance between the infeed star wheels is also narrowed to ensure that the article flow is restricted to two rows, and only two of the three article conveyors 44 are operative.

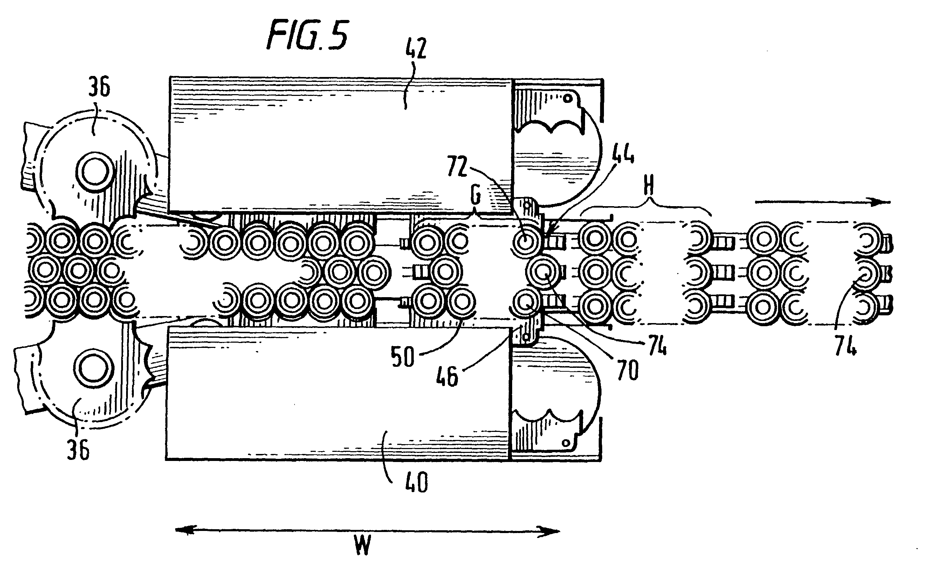

For those cartons requiring three rows of articles, the distance d between each grouping assembly 40, 42 is increased. Likewise, the infeed star wheels can also be moved further apart . For the arrangement shown in Figure 5, the grouping assemblies are used to grip the two outer rows of articles 70, 72 and the articles making up the centre row 74 are positioned in the void between adjacent articles in each of the outer rows 70, 72. As shown in Figure 5, the centre row leads the outer rows by half a bottle/can diameter. Thus, the central row is moved forward to the end of the working reach W by the outer rows of articles 70, 72.

The present invention also provides for adjustment to the number of articles per row by controlling the number of articles being fed by the star wheels 36 into the grouping station 38. It is envisaged that rows of one, two or three articles can be selected by utilising a corresponding number of recesses 50. If it is desired to increase the number of articles to five or more per row, then the endless chain set 46 illustrated in this embodiment. can be interchanged with another chain set comprising a spacer element with more recesses.

The articles gradually leave contact with the gripper assembly 38 and are transferred to the loading station 22 by means of the article conveyor 44.

At the loading station 22 illustrated in Figure 1, the cartons are introduced to the group of articles B from above as the carton 10 and article group G are moved forward in unison. The carton 10 is lowered onto the group G by the downward incline of the endless chains sets. For grouped articles, comprising three rows 70, 72, 74 it is preferred to alter the configuration from that designated by letter G to the configuration designated by letter H achieved by suitable guide means. In this embodiment, the change in configuration is achieved when end panels of the descending carton come into contact with leading and trailing articles, so that panels guide the bottles into lateral and longitudinal alignment as they arc loaded into the carton showing in Figure 5 at H. Of course, it is envisaged that the configuration adopted depends upon the type of carton being loaded.

In another class of embodiments, lugs mounted to side chain sets or flight bars, known in the art are introduced to the grouped articles at the end of the working reach W to effect the change in configuration from G to H.

Once the cartons have been loaded with articles, they are transferred by means of the article conveyor and/or pressure belt to a further set of endless chains with side lugs which are used to transfer the carton to the outfeed end of the machine. During this stage, the base panels are folded around to the underside of the carton and are interconnected by a locking mechanism known in the art.

According to this invention the speed of operation of the apparatus is improved as well as its efficiency and durability as the carton is moved from a collapsed position to a fully set up condition. Of course, the final set up operation is due in part to engagement with a back feeder and a corner of the carton with the lugs which then affects complete and final set up of a carton whilst being held by the suction cup.

While the preferred embodiment described herein is for loading bottles into cartons, it will be recognised that the invention is not limited to cartons for bottles. The invention may be used with machines for packaging cans, paperboard "bricks" and other containers into cartons.

Moreover, while the preferred embodiment described herein is shown as part of a machine for loading containers into vertically-loaded sleeve-type carton, the invention is not limited to cartons of this type. As will be recognised by those skilled in the art, the invention may be used with wrap-around or end-loaded cartons.

## Claims

1. A grouping mechanism (40, 42) for grouping articles to be loaded into a carton and delivered to the mechanism from an infeed stream at an infeed end of a packaging machine, which mechanism comprises a pair of opposed spacer elements (46), each said spacer element adapted to engage at least one article A from the infeed stream and to convey said article through a working reach (W) of said mechanism and transfer means provided to return each said spacer element along a return reach such that they are returned upstream of said working reach (W) **characterised in that** there further comprises adjustment means to adjust the spacing between said opposed spacer elements whereby a third article intermediate and juxtaposed said engaged articles is conveyed by said spacer elements (46).

2. A grouping mechanism according to claim 1 wherein said third article leads said engaged articles during the working reach (W) and wherein article alignment means is provided to move said third article into lateral alignment with said engaged articles when said engaged articles are disengaged from said spacer element.

3. A grouping mechanism according to claim 2 wherein said article alignment means is provided by opposed panels of said carton in contact with said articles to guide said articles into alignment.

4. A grouping mechanism as claimed in claim 2 wherein the article alignment means comprises lugs mounted to side chain assemblies for engaging leading and trailing ends of the grouping.

5. A grouping mechanism as claimed in any of claims 1 to 4 wherein there further comprises adjustment means to adjust the spacing between said spacer elements to receive two or three rows of articles.

6. A grouping mechanism as claimed in claim 5 wherein the adjustment means is provided by a moveable platform upon which one of the opposed spacer elements (46) is mounted to move said spacer element relative the other one of the opposed spacer elements.

7. A grouping mechanism according to any of claims 1 to 6 wherein said spacer element (46) comprises a part cylindrical recess (50) to receive a portion of said article being conveyed.

8. A grouping mechanism according to claim 7, wherein said spacer element (46) further comprises a second part cylindrical recess to receive a portion of a second article to be conveyed in a grouped arrangement with said first article.

9. A grouping mechanism as claimed in any preceding claim wherein the spacer element is mounted onto an endless chain (48) driven by drive means.

10. A grouping mechanism according to claim 9 wherein each said spacer elements (46) is provided with a cam follower that is mounted on a cam track (58, 60), wherein each said cam track provides a path for said spacer elements to maintain said recesses (50) parallel to said articles during said engagement.

11. A grouping mechanism according to any one of the preceding claims, wherein regulating means is provided to control the flow of articles at said infeed end, said regulating means further comprising means to control the pressure of said articles into the machine and means to determine the correct number of articles for each carton.

12. A grouping mechanism according to claim 11 wherein said means to control the pressure of said articles comprises an infeed star wheel (36).

## Patentansprüche

1. Ein Gruppierungsmechanismus (40, 42) zur Gruppierung von Gegenständen, die in eine Schachtel eingebracht werden sollen und die von einem Zuführungsstrom an einem Zuführungsende einer Verpackungsmaschine zu dem Mechanismus transportiert werden, wobei der Mechanismus ein Paar gegenüberliegender Beabstandungselemente (46) umfasst, wobei jedes Beabstandungselement angepasst ist, um mindestens einen Gegenstand A von dem Zuführungsstrom in Eingriff zu nehmen und den Gegenstand durch einen Arbeitsbereich (W) des Mechanismus zu fördern, wobei eine Transporteinrichtung bereitgestellt ist, um die Beabstandungselemente entlang eines Rückführungsbereichs derart zurückzuführen, dass sie stromaufwärts von dem Arbeitsbereich (W) zurückgeführt werden, **dadurch gekennzeichnet, dass** der Mechanismus ferner eine Einstellungseinrichtung umfasst, um den Abstand zwischen den gegenüberliegenden Beabstandungselementen einzustellen, wodurch ein dritter Gegenstand, der sich zwischen den in Eingriff genommenen Gegenständen und angrenzend an diese befindet, durch die Beabstandungselemente (46) gefördert wird.

2. Gruppierungsmechanismus nach Anspruch 1, wobei der dritte Gegenstand die in Eingriff genommenen Gegenstände in dem Arbeitsbereich (W) führt und wobei eine Gegenstandsausrichtungseinrichtung bereitgestellt ist, um den dritten Gegenstand in eine seitliche Ausrichtung mit den in Eingriff genommenen Gegenständen zu bewegen, wenn die in Eingriff genommenen Gegenstände von dem Beabstandungselement aus dem Eingriff gebracht werden.

3. Gruppierungsmechanismus nach Anspruch 2, wobei die Gegenstandsausrichtungseinrichtung durch gegenüberliegende Wandflächen der Schachtel bereitgestellt wird, die sich in Kontakt mit den Gegenständen befinden, um die Gegenstände in einen ausgerichteten Zustand zu führen.

4. Gruppierungsmechanismus nach Anspruch 2, wobei die Gegenstandsausrichtungseinrichtung Nasen umfasst, die an Seitenkettenanordnungen befestigt sind, um Führungsund Nachlaufenden der Gruppierung in Eingriff zu nehmen.

5. Gruppierungsmechanismus nach einem der Ansprüche 1 bis 4, der ferner eine Einstellungseinrichtung zur Einstellung des Abstands zwischen den Beabstandungselementen zur Aufnahme von zwei oder drei Reihen von Gegenständen umfasst.

6. Gruppierungsmechanismus nach Anspruch 5, wobei die Einstellungseinrichtung durch eine bewegliche Plattform bereitgestellt ist, auf der eines der gegenüberliegenden Beabstandungselemente (46) befestigt ist, um das Beabstandungselement relativ zu dem anderen gegenüberliegenden Beabstandungselement zu bewegen.

7. Gruppierungsmechanismus nach einem der Ansprüche 1 bis 6, wobei das Beabstandungselement (46) eine teilzylindrische Ausnehmung (50) umfasst, um einen Abschnitt des geförderten Gegenstands aufzunehmen.

8. Gruppierungsmechanismus nach Anspruch 7, wobei das Beabstandungselement (46) ferner eine zweite teilzylindrische Ausnehmung umfasst, um einen Abschnitt eines zweiten Gegenstands aufzunehmen, der in einer gruppierten Anordnung mit dem ersten Gegenstand gefördert wird.

9. Gruppierungsmechanismus nach einem der vorstehenden Ansprüche, wobei das Beabstandungselement auf einer Endloskette (48) befestigt ist, die von einer Antriebseinrichtung angetrieben wird.

10. Gruppierungsmechanismus nach Anspruch 9, wobei jedes der Beabstandungselemente (46) mit einem Gleitstück ausgestattet ist, das auf einer Kurvenbahn (58, 60) befestigt ist, wobei jede der Kurvenbahnen einen Weg für die Beabstandungselemente bereitstellt, um die Ausnehmungen (50) während des In-Eingriff-Nehmens parallel zu den Gegenständen zu halten.

11. Gruppierungsmechanismus nach einem der vorstehenden Ansprüche, wobei eine Regulierungseinrichtung bereitgestellt ist, um den Gegenstandsstrom an dem Zuführungsende zu steuern, wobei die Regulierungseinrichtung ferner eine Einrichtung zum Steuern der Druckkraft der Gegenstände in die Maschine und eine Einrichtung zur Bestimmung der korrekten Anzahl von Gegenständen für jede Schachtel umfasst.

12. Gruppierungsmechanismus nach Anspruch 11, wobei die Einrichtung zum Steuern der Druckkraft der Gegenstände ein Zuführungssternrad (36) umfasst.

## Revendications

1. Mécanisme de regroupement (40, 42) pour grouper des articles à charger dans un carton et délivrés au mécanisme depuis un flux d'entrée à une extrémité d'entrée d'une machine d'emballage, lequel mécanisme comprend une paire d'éléments d'espacement (46) opposés, chacun desdits éléments d'espacement étant adapté pour coopérer avec au moins un article A du flux d'entrée et pour transporter ledit article sur un tronçon de travail (W) dudit mécanisme et un moyen de transfert étant prévu pour faire revenir chacun desdits éléments d'espacement le long d'un tronçon de retour de telle manière qu'ils sont renvoyés en amont dudit tronçon de travail (W) **caractérisé par le fait qu'**il est également prévu un moyen de réglage pour régler l'espacement entre lesdits éléments d'espacement opposés grâce à quoi un troisième article intermédiaire et juxtaposé auxdits articles engagés est transporté par lesdits éléments d'espacement (46).

2. Mécanisme de regroupement selon la revendication 1, dans lequel ledit troisième article entraîne lesdits articles engagés pendant le tronçon de travail (W) et dans lequel un moyen d'alignement d'articles est prévu pour mettre ledit troisième article en alignement latéral avec lesdits articles engagés lorsque lesdits articles engagés sont dégagés dudit élément d'espacement.

3. Mécanisme de regroupement selon la revendication 2, dans lequel ledit moyen d'alignement d'articles est constitué par des panneaux opposés dudit carton en contact avec lesdits articles pour guider lesdits articles et les aligner.

4. Mécanisme de regroupement selon la revendication 2, dans lequel le moyen d'alignement d'articles comprend des oreilles montées sur des ensembles de chaînes latérales pour attraper des extrémités de tête et de queue du groupement.

5. Mécanisme de regroupement selon l'une quelconque des revendications 1 à 4, dans lequel il est également prévu un moyen de réglage pour régler l'espacement entre lesdits éléments d'espacement pour recevoir deux ou trois rangées d'articles.

6. Mécanisme de regroupement selon la revendication 5, dans lequel le moyen de réglage est constitué d'une plateforme mobile sur laquelle est monté l'un des éléments d'espacement (46) opposés pour déplacer ledit élément d'espacement par rapport à l'autre des éléments d'espacement opposés.

7. Mécanisme de regroupement selon l'une quelconque des revendications 1 à 6, dans lequel ledit élément d'espacement (46) comprend un évidement en partie cylindrique (50) pour recevoir une partie dudit article transporté.

8. Mécanisme de regroupement selon la revendication 7, dans lequel ledit élément d'espacement (46) comprend en outre un deuxième évidement en partie cylindrique pour recevoir une partie d'un deuxième article à transporter dans un agencement groupé avec ledit premier article.

9. Mécanisme de regroupement selon l'une quelconque des revendications précédentes, dans lequel l'élément d'espacement est monté sur une chaîne sans fin (48) entraînée par un moyen d'entraînement.

10. Mécanisme de regroupement selon la revendication 9, dans lequel chacun desdits éléments d'espacement (46) est muni d'un galet de came qui est monté sur une piste (58, 60) de came, chacune desdites pistes de came fournissant un trajet pour lesdits éléments d'espacement pour maintenir lesdits évidements (50) parallèles auxdits articles pendant ledit engagement.

11. Mécanisme de regroupement selon l'une quelconque des revendications précédentes, dans lequel un moyen de régulation est prévu pour commander le flux des articles à ladite extrémité d'entrée, ledit moyen de régulation comprenant en outre un moyen pour commander la pression desdits articles dans la machine et un moyen pour déterminer le nombre exact d'articles pour chaque carton.

12. Mécanisme de regroupement selon la revendication 11, dans lequel ledit moyen pour commander la pression desdits articles comprend une roue d'entrée en étoile (36).
